(19) Europäisches Patentamt
European Patent Office
Office européen des brevets

(11) EP 2 787 829 B1

(12) **EUROPEAN PATENT SPECIFICATION**

(45) Date of publication and mention of the grant of the patent:
**10.08.2016 Bulletin 2016/32**

(21) Application number: **12854757.7**

(22) Date of filing: **05.12.2012**

(51) Int Cl.:
***A01P 13/00*** *(2006.01)*

(86) International application number:
**PCT/US2012/067942**

(87) International publication number:
**WO 2013/085991 (13.06.2013 Gazette 2013/24)**

(54) **HERBICIDAL COMPOSITION CONTAINING 4-AMINO-3-CHLORO-6-(4-CHLORO-2-FLUORO-3-METHOXYPHENYL) PYRIDINE-2-CARBOXYLIC ACID OR DERIVATIVE THEREOF AND FLUROXYPYR OR DERIVATIVES THEREOF**

HERBIZIDE ZUSAMMENSETZUNG MIT 4-AMINO-3-CHLORO-6-(4-CHLOR-2-FLUOR-3-METHOXYPHENYL)PYRIDINE-2-CARBONSÄURE ODER DERIVAT DAVON UND FLUROXYPYR ODER DERIVATEN DAVON

COMPOSITION HERBICIDE CONTENANT L'ACIDE 4-AMINO-3-CHLORO-6-(4-CHLORO-2-FLUORO-3-MÉTHOXYPHÉNYL)PYRIDINE-2-CARBOXYLIQUE OU UN DÉRIVÉ ET LE FLUROXYPYR OU DES DÉRIVÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2011 US 201161567413 P**

(43) Date of publication of application:
**15.10.2014 Bulletin 2014/42**

(73) Proprietor: **Dow AgroSciences LLC**
**Indianapolis, IN 46268 (US)**

(72) Inventors:
- **OVALLE, Daniel**
  **Bogota (CO)**
- **CARRANZA GARZON, Nelson M.**
  **Ibague (CO)**
- **ROJAS-CALVO, Carlos E.**
  **Guadalajara, CP 45238 (MX)**
- **PANIAGUA, Leonardo**
  **28042 Madrid (ES)**
- **REICHERT, Alberto**
  **Veracruz, 91919 (MX)**
- **MASTERS, Robert A.**
  **Zionsville, IN 46077 (US)**

(74) Representative: **f & e patent**
**Fleischer, Engels & Partner mbB, Patentanwälte**
**Braunsberger Feld 29**
**51429 Bergisch Gladbach (DE)**

(56) References cited:

| | |
|---|---|
| **WO-A1-2015/054560** | **WO-A1-2015/054561** |
| **WO-A2-2009/029518** | **US-A1- 2010 130 363** |
| **US-B2- 7 314 849** | **US-B2- 7 314 849** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Cross Reference to Related Applications

This application claims the benefit of U.S. Provisional Patent Application Serial No. 61/567,413 filed December 6, 2011.

### Field

Provided herein are herbicidal compositions and methods for controlling undesirable vegetation utilizing compositions comprising 4-amino-3-chloro-6-(4-chloro-2-fluoro-3-methoxyphenyl)pyridine-2-carboxylic acid or an agriculturally acceptable ester, amide, or salt thereof and (b) fluroxypyr or an agriculturally acceptable ester, amide, or salt thereof, wherein the carboxylic acid equivalent weight ratio of (a) to (b) is from 1:3 to 1:62.

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response of each factor applied separately." The present disclosure is based in part on the discovery that fluroxypyr and certain pyridine carboxylic acids, already known individually for their herbicidal efficacy, display a synergistic effect when applied in combination.

### Summary

Provided herein are herbicidal compositions and methods of controlling undesirable vegetation comprising utilizing a herbicidally effective amount of (a) a compound of formula (I):

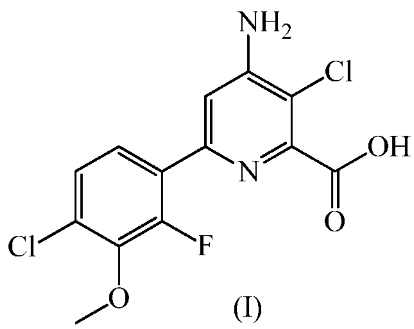

(I)

or, with respect to the carboxylic acid moiety, an agriculturally acceptable salt, ester or amide thereof, and (b) fluroxypyr, or an agriculturally acceptable ester, amide, or salt thereof, wherein the carboxylic acid equivalent weight ratio of (a) to (b) is from 1:3 to 1:62.

The compositions may also contain an agriculturally acceptable adjuvant or carrier. The compositions and methods may also be employed in combination with known herbicide safeners, including, but not limited to, cloquintocet (e.g., acid or mexyl).

The species spectra of the pyridine carboxylic acid of formula (I) or ester, amide, or salt thereof and fluroxypyr or ester, amide, or salt thereof, i.e., the weed species which the respective compounds control, are broad and highly complementary. In certain embodiments, the compositions and methods provided herein provide control of escoba blanca (*Melochia parviflora* L; MEOPA), redroot pigweed (*Amaranthus retroflexus;* AMARE), purple deadnettle (*Lamium purpureum;* LAMPU), prostrate knotweed (*Polygonum aviculare;* POLAV), common chickweed (*Stellaria media;* STEME), wild chamomile (*Matricaria chamomilla;* MATCH), ivy-leaved speedwell (*Veronica hederifolia;* VERHE), corn poppy (*Papaver rhoeas* PAPRH), wild mustard (*Sinapis arvensis;* SINAR), common speedwell (*Veronica officinalis;* VEROF), field violet (*Viola arvensis;* VIOAR), sickle pod (*Cassia obtusifolia;* CASOB), common lambsquarters (*Chenopodium*

*album;* CHEAL), Canada thistle (*Cirsium arvense;* CIRAR), and annual woundwort (*Stachys annua;* STAAN) at application rates equal to and lower than the rates of the individual compounds.

Detailed Description

A number of pyridine carboxylic acid compounds are described in U.S. Patent 7,314,849 (B2), including 4-amino-3-chloro-6-(4-chloro-2-fluoro-3-methoxyphenyl)pyridine-2-carboxylic acid (I). The pyridine carboxylic acid of the formula (I) controls annual grass weeds including *Setaria*, *Pennisetum* and *Echinochloa;* broadleaf weeds such as *Papaver*, *Galium, Lamium*, *Kochia*, *Amaranthus*, *Aeschynomene, Sesbania* and *Monochoria;* and sedge species such as *Cyperus* and *Scirpus*/*Schoenoplectus*. The methyl ester is described as halauxifen-methyl or XDE-729.

Fluroxypyr is the common name for 2-[(4-amino-3,5-dichloro-6-fluoro-2-pyridinyl)oxy]acetic acid. Its herbicidal activity is described in The Pesticide Manual, Fifteenth Edition, 2009. Fluroxypyr controls a range of economically important broadleaf weeds, e.g., in small grain crops. An exemplary ester of fluroxypyr is the 1-methylheptyl, *i.e.,* $CH_3(CH_2)_5CH(CH_3)$- ester.

Provided herein are herbicidal compositions and methods of controlling undesirable vegetation utilizing a herbicidally effective amount of (a) a compound of formula (I):

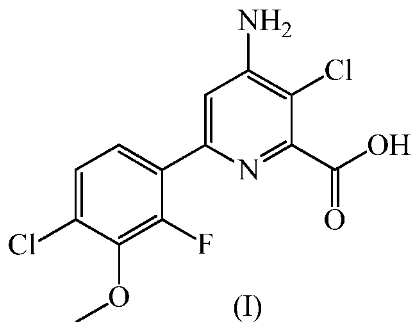

(I)

or, with respect to the carboxylic acid moiety, an agriculturally acceptable salt, ester or amide thereof, and (b) fluroxypyr, or an agriculturally acceptable ester, amide, or salt thereof, wherein the carboxylic acid equivalent weight ratio of (a) to (b) is from 1:3 to 1:62. In some embodiments, (a) is the methyl ester or triethyl ammonium salt of the compound of formula I. In some embodiments, (b) is the 1-methyl-heptyl ester of fluroxypyr.

The term herbicide is used herein to mean an active ingredient that kills, controls or otherwise adversely modifies the growth of plants. A herbicidally effective or vegetation controlling amount is an amount of active ingredient which causes an adversely modifying effect and includes deviations from natural development, killing, regulation, desiccation, or retardation. The terms plants and vegetation include germinant seeds, emerging seedlings, plants emerging from vegetative propagules, and established vegetation.

Herbicidal activity is exhibited by the compounds when they are applied directly to the plant or to the locus of the plant, i.e., area adjacent to the plant, at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, and the soil type, as well as the amount of chemical applied. These and other factors can be adjusted to promote non-selective or selective herbicidal action. In some embodiments, the compositions described herein are applied as a post-emergence or pre-emergence application to crops and weeds grown in soil, or in-water application to flooded paddy rice or water bodies (e.g., ponds, lakes and streams), to relatively immature undesirable vegetation to achieve the maximum control of weeds. In certain embodiments, the compositions and methods are applied via burn-down.

In some embodiments, the compositions and methods provided herein are utilized to control weeds in crops, e.g., to cereals, rice, perennial plantation crops, corn, sorghum, oilseed rape, turf, range and pasture, industrial vegetation management (IVM), rights-of-way and in any auxinic-tolerant crops. In some embodiments, the compositions and methods are utilized to control weeds in cereals or oil seed rape.

The compositions and methods described herein can be used to control undesirable vegetation in glyphosate-tolerant-, glufosinate-tolerant-, dicamba-tolerant-, phenoxy auxin-tolerant-, pyridyloxy auxin-tolerant-, aryloxyphenoxypropionate-tolerant-, acetyl CoA carboxylase (ACCase) inhibitor-tolerant-, imidazolinone-tolerant-, acetolactate synthase (ALS) inhibitor-tolerant-, 4-hydroxyphenyl-pyruvate dioxygenase (HPPD) inhibitor-tolerant-, protoporphyrinogen oxidase (PPO) inhibitor-tolerant-, triazine-tolerant- and bromoxyniltolerant crops, for example, in conjunction with glyphosate, glufosinate, dicamba, phenoxy auxins, pyridyloxy auxins, aryloxyphenoxypropionates, ACCase inhibitors, imidazolinones, ALS inhibitors, HPPD inhibitors, PPO inhibitors, triazines, and bromoxynil. The compositions and methods may be used in controlling undesirable vegetation in crops possessing multiple or stacked traits conferring tolerance to multiple chemistries and/or inhibitors of multiple modes of action. In some embodiments, the compound of formula (I) or derivative thereof and fluroxypyr or derivative thereof and a complementary herbicide or salt or ester thereof are used in combination with herbicides that are selective for the crop being treated and which complement the spectrum of weeds controlled by these compounds at the application rate employed. In some embodiments, the compositions described herein and other complementary herbicides are applied at the same time, either as a combination formulation or as a tank mix.

In some embodiments, the compositions and methods provided herein are utilized to control undesirable vegetation in cereals. In certain embodiments, the undesirable vegetation is *Alopecurus myosuroides* Huds. (blackgrass, ALOMY), *Apera spica-venti* (L.) Beauv. (windgrass, APESV), *Avena fatua* L. (wild oat, AVEFA), *Bromus tectorum* L. (downy brome, BROTE), *Lolium multiflorum* Lam. (Italian ryegrass, LOLMU), *Phalaris minor* Retz. (littleseed canarygrass, PHAMI), *Poa annua* L. (annual bluegrass, POANN), *Setaria pumila* (Poir.) Roemer & J.A. Schultes (yellow foxtail, SETLU), *Setaria viridis* (L.) Beauv. (green foxtail, SETVI), *Cirsium arvense* (L.) Scop. (Canada thistle, CIRAR), *Galium aparine* L. (catchweed bedstraw, GALAP), *Kochia scoparia* (L.) Schrad. (kochia, KCHSC), *Lamium purpureum* L. (purple deadnettle , LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica* Poir. (Persian speedwell, VERPE), *Viola arvensis* Murr. (field violet, VIOAR), or *Viola tricolor* L. (wild violet, VIOTR).

In some embodiments, the composition and methods provided herein are utilized to control undesirable vegetation in range and pasture, IVM and rights of way. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Melochia panviflora* (escoba blanca, MEOPA), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the compositions and methods provided herein are utilized to control undesirable vegetation in rice. In certain embodiments, the undesirable vegetation is *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) LINK (junglerice, ECHCO), *Echinochloa oryzoides* (Ard.) Fritsch (early watergrass, ECHOR), *Echinochloa oryzicola* (Vasinger) Vasinger (late watergrass, ECHPH), *Echinochloa* spp, *Ischaemum rugosum* Salisb. (saramollagrass, ISCRU), *Leptochloa chinensis* (L.) Nees (Chinese sprangletop, LEFCH), *Leptochloa fascicularis* (Lam.) Gray (bearded sprangletop, LEFFA), *Leptochloa panicoides* (Presl.) Hitchc. (Amazon sprangletop, LEFPA), *Panicum dichotomiflorum* (L.) Michx. (fall panicum, PANDI), *Paspalum dilatatum* Poir. (dallisgrass, PASDI), *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenoplectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (POLHP, mild smartweed), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In certain embodiments, the undesirable vegetation is *Alopecurus myosuroides* Huds. (blackgrass, ALOMY), *Avena fatua* L. (wild oat, AVEFA), *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Lolium multiflorum* Lam. (Italian ryegrass, LOLMU), *Panicum dichotomiflorum* Michx. (fall panicum, PANDI), *Panicum miliaceum* L. (wild-proso millet, PANMI), *Setaria faberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus*

species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), *Taraxacum officinale* F.H.Wigg (common dandelion, TAROF) or *Xanthium strumarium* L. (common cocklebur, XANST).

In some embodiments, the compositions and methods are used to control GALAP, LAMAM, GAETE, CHEAL, DESO, PAPRH, GALAP, STEME, GERSS, LAMSS, VERPE, PAPRH, ERIBO, ERICA, Conyza, GLXMA, or CHEAL.

In some embodiments, the compositions and methods provided herein are utilized to control undesirable vegetation consisting of grass, broadleaf and sedge weeds. In certain embodiments, the compositions and methods provided herein are utilized to control undesirable vegetation including species in the genera *Amaranthus, Cassia*, *Chenopodium*, *Cirsium, Lamium, Matricaria*, *Melochia, Papaver*, *Polygonum Sinapis*, *Stachys*, *Stellaria, Veronica,* and *Viola.*

In some embodiments, the combination of (a) the compound of formula I or an agriculturally acceptable ester, amide, or salt thereof and (b) fluroxypyr or an agriculturally acceptable ester, amide, or salt thereof, are used to control escoba blanca *(Melochia parviflora L;* MEOPA), redroot pigweed *(Amaranthus retroflexus;* AMARE), purple deadnettle *(Lamium purpureum;* LAMPU), prostrate knotweed (*Polygonum aviculare;* POLAV), common chickweed *(Stellaria media;* STEME), wild chamomile (*Matricaria chamomilla;* MATCH), ivy-leaved speedwell *(Veronica hederifolia;* VERHE), corn poppy (*Papaver rhoeas* PAPRH), wild mustard *(Sinapis arvensis;* SINAR), common speedwell *(Veronica officinalis;* VEROF), field violet *(Viola arvensis;* VIOAR), sickle pod (*Cassia obtusifolia;* CASOB), common lambsquarters (*Chenopodium album;* CHEAL), Canada thistle *(Cirsium arvense;* CIRAR), and annual woundwort (*Stachys annua;* STAAN)

The compositions and methods employing the combination of the compound of formula I and fluroxypyr, or agriculturally acceptable salts, esters, or amides of either component, and the compositions described herein may also be employed to control herbicide resistant or tolerant weeds. Exemplary resistant or tolerant weeds include, but are not limited to, biotypes resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to multiple herbicides, multiple chemical classes, and multiple herbicide modes-of-action.

In some embodiments, the compositions or components of the compositions are applied as a post-emergence foliar application to immature, undesirable vegetation to achieve the maximum control of weeds.

In some embodiments, the carboxylic acid equivalent weight ratio of (a) to (b) is from 1:3 to 1:31. In some embodiments, the carboxylic acid weight ratio is at less than 1:5, 1:10, 1:20 or 1:30.

In certain embodiments, the composition and methods provided herein utilize the methyl ester of the compound of formula (I) and the methylheptyl (MHE, meptyl) ester of fluroxypyr. In certain embodiments, the carboxylic acid weight ratio of the methyl ester of the compound of formula (I) to the fluroxypyr MHE is from 1:3 to 1:31. In certain embodiments, the carboxylic acid weight ratio is from 1:3 to 1:7. In certain embodiments, the carboxylic acid weight ratio is from 1:23 to 1:31. In certain embodiments, the carboxylic acid weight ratio is from 1:15 to 1:27. In certain embodiments, the carboxylic acid weight ratio is from 1:18 to 1:25.

In certain embodiments, the composition and methods provided herein utilize the triethylamine salt of the compound of formula (I) and the methylheptyl (MHE, meptyl) ester of fluroxypyr. In certain embodiments, the carboxylic acid weight ratio of the triethylamine salt of the compound of formula (I) and the fluroxypyr MHE is from 1:3 to 1:31. In some embodiments, the carboxylic acid weight ratio is from 1:6 to 1:17.

The rate at which the components of the compositions and methods is applied will depend upon the particular type of weed to be controlled, the degree of control required, and the timing and method of application. In one embodiment, the composition described herein can be applied at an application rate of from 25 grams acid equivalent per hectare (g ae/ha) to 610 g ae/ha based on the total amount of active ingredients in the composition, and in another embodiment from 52 gr ae/ha to 235 gr ai/ha. In some embodiments, the fluroxypyr or salt, ester, or amide is applied at a rate from 25 g ae/ha to 560 g ae/ha and the compound of formula (I) is applied at a rate from 0.5 g ae/ha to 50 g ae/ha. In another embodiment fluroxypyr, or salt, ester, of amide thereof is applied at a rate from 50 g ae/ha to 200 g ae/ha and the

compound of formula (I) is applied at a rate from 2 g ae/ha to 35 g ae/ha. In some embodiments, the compound of formula (I) is applied at a rate of less than 10 g ae/ha.

In some embodiments, the compound of formula (I) or ester, amide, or salt thereof is applied at a rate from 1 g ae/ha to 70 g ae/ha and fluroxypyr or an ester, amide, or salt thereof is applied at a rate of 2.5 g ae/ha to 400 g ae/ha. In another embodiment, the compound of formula (I) or an ester, amide, or salt thereof is applied at a rate from 2 g ae/ha to 35 g ae/ha and fluroxypyr or an ester, amide, or salt thereof is applied at a rate of 5 g ae/ha to 200 g ae/ha. In certain embodiments, the method utilizes the methyl ester or the TEA salt of the compound of formula (I) and the meptyl ester of fluroxypyr. In one embodiment, the methyl ester of the compound of formula (I) is applied at a rate from 2 g ae/ha to 35 g ae/ha and the meptyl ester of fluroxypyr is applied at a rate of 5.0 g ae/ha to 150 g ae/ha. In another embodiment, the TEA salt of the compound of formula (I) is applied at a rate from 8.8 g ae/ha to 35 g ae/ha and the meptyl ester of fluroxypyr is applied at a rate of 150 g ae/ha to 200 g ae/ha.

In some embodiments of the methods described herein, the compound of formula I or, with respect to its carboxylic acid moiety, an agriculturally acceptable salt, ester, or amide thereof, and fluroxypyr or, with respect to its carboxylic acid moiety, an agriculturally acceptable salt, ester, or amide thereof, are applied simultaneously, e.g., in the form of an intact composition. In some embodiments, the components are applied sequentially, e.g., within 5, 10, 15, or 30 minutes of each other; 1, 2, 3, 4, 5, 10, 12, 24, or 48 hour(s) or each other, or 1 week of each other.

The components of the compositions and methods of the present disclosure can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present disclosure include, but are not limited to: 4-CPA; 4-CPB; 4-CPP; 2,4-D; 3,4-DA; 2,4-DB; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bilanafos, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, flurtamone, fluthiacet, fomesafen, foramsulfuron, fosamine, furyloxyfen, glufosinate, glufosinate-ammonium, glyphosate, halosafen, halosulfuron, haloxydine, haloxyfop, haloxyfop-P, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin,

oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, triafamone, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, choline salts, esters, optically active isomers and mixtures thereof.

The methods and compositions described herein can, further, be used in conjunction with glyphosate, glufosinate, dicamba, imidazolinones, sulfonylureas, triazolopyrimidines or 2,4-D on glyphosate-tolerant, glufosinate-tolerant, dicamba-tolerant, imidazolinone-tolerant, sulfonylurea-tolerant, triazolopyrimidine-tolerant or 2,4-D-tolerant crops. In one embodiment, the synergistic composition is used in combination with herbicides that are selective for the crop being treated and which complement the spectrum of weeds controlled by these compounds at the application rate employed. In another embodiment, the synergistic composition described herein and other complementary herbicides are applied at the same time, either as a combination formulation or as a tank mix, or sequentially. Similarly the herbicidal compounds of the present disclosure can be used in conjunction with acetolactate synthase inhibitors on acetolactate synthase inhibitor tolerant crops.

The compositions and methods of the present disclosure can be employed in combination with known herbicide safeners, such as benoxacor, benthiocarb, brassinolide, cloquintocet, cloquintocet-mexyl, cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, mefenpyr-diethyl, MG 191, MON 4660, naphthalic anhydride (NA), oxabetrinil, R29148 and *N*-phenylsulfonylbenzoic acid amides, to enhance their selectivity. In one embodiment, cloquintocet (e.g., acid or mexyl form) is used as a safener for the compositions described herein.

In one embodiment, the compositions of the present disclosure are used in mixtures containing a herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or can be tank mixed or applied sequentially.

Suitable agricultural adjuvants and carriers that are useful in preparing the herbicidal mixtures of the compositions described herein are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents used include, but are not limited to, petroleum fractions or hydrocarbons such as mineral oil, aromatic solvents, paraffinic oils; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate; esters of mono, di and polycarboxylic acids.

Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol,

ethylene glycol, propylene glycol, glycerine, *N*-methyl-2-pyrrolidinone, *N,N*-dimethyl alkylamides, dimethyl sulfoxide, liquid fertilizers. In some embodiments, water is the carrier for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, and lignin.

In one embodiment, one or more surface-active agents are incorporated into the compositions of the present disclosure. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanolammonium lauryl sulfate; alkylarylsulfonate salts, such as calcium dodecyl benzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkyl-naphthalene-sulfonate salts, such as sodium dibutylnaphthalenesulfonate; dialkyl esters of sulfo-succinate salts, such as sodium di(2-ethylhexyl) sulfo-succinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil; and esters, including but not limited to, methyl esters of the above vegetable oils.

Some of these materials, such as vegetable or seed oils and their esters, can be used interchangeably as an agricultural adjuvant, as a liquid carrier or as a surface active agent.

Other additives used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents.

The compositions may also contain other compatible components, for example, other herbicides, plant growth regulators, fungicides, insecticides, and can be formulated with liquid fertilizers or solid, particulate fertilizer carriers such as ammonium nitrate, and urea.

In one embodiment, the concentration of the active ingredients in the synergistic composition of the present disclosure is from 0.001 to 98 percent by weight, and in another embodiment, concentrations from 0.01 to 90 percent by weight are employed. In compositions designed to be employed as concentrates, the active ingredients are present in a concentration from 2 to 98 weight percent, and in another embodiment, from 5 to 90 weight percent. In one embodiment, such compositions are diluted with an inert carrier, such as water, before application. The diluted compositions described herein that are applied to weeds or the loci of weeds contain 0.005 to 5.0 weight percent active ingredient (ai) and, in another embodiment contain 0.01 to 2.0 weight percent ai.

The present compositions can be applied to weeds or their locus by the use of conventional ground or aerial dusters, sprayers, and granule applicators, by addition to irrigation or paddy water, and by other conventional means known to those skilled in the art.

The following non-limiting examples illustrate the present disclosure.

<u>Examples</u>

<u>Evaluation of Postemergence Herbicidal Activity of Mixtures in Cereal crops and Range and Pasture.</u>

Field trials were conducted in cereal crops (winter wheat (TRZAW), spring wheat (TRZAS) and spring barley (HORVU) in Canada, France, Germany, Spain, Denmark, United Kingdom and Belgium, and pasture trials were conducted in Colombia using standard herbicide small plot research methodology. Plot size was typical for small plot research, varying from 1.4 to 2 meters (m) wide by 3 to 10 m long. There were 2-4 replicates per treatment. The soil type ranged from coarse, to medium or heavy in terms of soil texture. Cereal crops were planted, grown and maintained as commercial production fields. Perennial pastures were natural plant and weed infestations as per normal local cultural practices. The cereal and pasture crops were grown using normal cultural practices for fertilization and maintenance to ensure good growth of the crop/pastures and the weeds.

Treatments were applied by backpack or bicycle sprayers using either compressed air, nitrogen, or carbon dioxide ($CO_2$), at spray pressures from 200 to 300 Kpa. Spray tips were typically Flat Fan Teejet nozzles, such as TJ8003. Spray volumes varied from 200 to 400 liters per hectare (L/ha). MEOPA plant size at application varied from 70 to 80 centimeters (cm) tall active growth at flowering stage. All cereal weeds tested varied from 2 leaf to 8 leaf and

often branched or tillered.

For each treatment, the appropriate formulated product amount to treat the plot area, to achieve the desired application rate, based on unit area of application (hectare), was calculated, measured, and mixed in water prior to applying with the backpack or bicycle sprayer. Treatments were rated as compared to the untreated control plots. The commercial fluroxypyr formulations used were Starane® Ultra (333 gr ae/liter) or Starane® 2 (200 gr ae/liter). Compound I was formulated as a 20% weight acid equivalent wettable granule
(WG) or as a 7.5 gr ae/liter EC of the corresponding methyl ester. All Compound (I) treatments were tank mixed with an adjuvant. Compound (I) treatments in the cereal trials contained the safener cloquintocet-mexyl.

Evaluation

Colby's equation was used to determine the herbicidal effects expected from the mixtures (Colby, S. R. Calculation of the synergistic and antagonistic response of herbicide combinations. Weeds 1967, 15, 20-22.).

The following equation was used to calculate the expected activity of mixtures containing two active ingredients, A and B:

$$\text{Expected} = A + B - (A \times B/100)$$

A = observed efficacy of active ingredient A at the same concentration as used in the mixture.

B = observed efficacy of active ingredient B at the same concentration as used in the mixture.

Some of the compounds tested, application rates employed, plant species tested, and results are given in Tables 1 to 6.

Table 1. Synergistic Activity of XDE-729 Methyl Ester and Fluroxypyr Methylheptyl Ester (MHE) Herbicidal Compositions on MEOPA Control at 14 Days After Application (DAA) in Range and Pasture Crops.

| XDE-729 (Methyl Ester) | Fluroxypyr (MHE) | MEOPA (14 DAA) | |
|---|---|---|---|
| (grams ae/ha) | | Obs | Exp |
| 17.5 | 0 | 48.5 | - |
| 0 | 120 | 3.5 | - |
| 17.5 | 120 | 71.6 | 50.3 |
| 35 | 0 | 63.1 | - |
| 0 | 120 | 3.5 | - |
| 35 | 120 | 93.3 | 64.4 |

Table 2. Synergistic Activity of XDE-729 Methyl Ester (I) and Fluroxypyr Methylheptyl Ester (MHE) Herbicidal Compositions on CASOB and MEOPA Control at 29-63 Days After Application (DAA) in Range and Pasture Crops.

| XDE-729 (Me) | Fluroxypyr (MHE) | % Visual Injury | | | |
|---|---|---|---|---|---|
| (grams ae/ha) | | CASOB (29-42 DAA) | | MEOPA (63 DAA) | |
| | | Obs | Exp | Obs | Exp |
| 18 | 0 | 6 | - | 25 | - |
| 0 | 120 | 18 | - | 3 | - |
| 18 | 120 | 64 | 22 | 72 | 27 |
| 35 | 0 | 16 | - | 42 | - |
| 0 | 120 | 18 | - | 8 | - |
| 35 | 120 | 60 | 29 | 94 | 46 |

Table 3. Synergistic Activity of XDE-729 Methyl Ester (I) and Fluroxypyr Methylheptyl Ester (MHE) Herbicidal Compositions on PAPRH, SINAR, STEME, VEROF, and VIOAR Control at 14 - 76 Days After Application (DAA) in Cereal Crops.

| XDE-729 (Me) | Fluroxypyr (MHE) | % Visual Injury | | | | | | | | | |
|---|---|---|---|---|---|---|---|---|---|---|---|
| (grams ae/ha) | | PAPRH (28 DAA) | | SINAR (58 DAA) | | STEME (76 DAA) | | VEROF (28 DAA) | | VIOAR (14 DAA) | |
| | | Obs | Exp | Obs | Exp | Obs | Exp | Obs | Exp | Obs | Exp |
| 4.5 | 0 | - | - | - | - | 19 | - | - | - | - | - |
| 0 | 140 | - | - | - | - | 77 | - | - | - | - | - |
| 4.5 | 140 | - | - | - | - | 99 | 81 | - | - | - | - |
| 6 | 0 | 54 | - | 0 | - | 29 | - | 0 | - | 10 | - |
| 0 | 140 | 5 | - | 13 | - | 77 | - | 0 | - | 50 | - |
| 6 | 140 | 87 | 57 | 90 | 13 | 98 | 83 | 73 | 0 | 70 | 55 |

Table 4. Synergistic Activity of XDE-729 Methyl Ester (I) and Fluroxypyr Methylheptyl Ester (MHE) Herbicidal Compositions on AMARE, LAMPU, POLAV, and STEME Control at 13 - 56 Days After Application (DAA) in Cereal Crops.

| XDE-729 (Me) | Fluroxypyr (MHE) | % Visual Injury | | | | | | | |
|---|---|---|---|---|---|---|---|---|---|
| (grams ae/ha) | | AMARE (56 DAA) | | LAMPU (28 DAA) | | POLAV (13-27 DAA) | | STEME (30 DAA) | |
| | | Obs | Exp | Obs | Exp | Obs | Exp | Obs | Exp |
| 2 | 0 | - | - | 73 | - | - | - | - | - |
| 0 | 50 | - | - | 4 | - | - | - | - | - |
| 2 | 50 | - | - | 91 | 74 | - | - | - | - |
| 2 | 0 | - | - | - | - | 0 | - | 58 | - |
| 0 | 80 | - | - | - | - | 61 | - | 81 | - |
| 3 | 80 | - | - | - | - | 83 | 61 | 99 | 92 |
| 5 | 0 | 50 | - | - | - | 53 | - | - | - |
| 0 | 77 | 20 | - | - | - | 25 | - | - | - |
| 5 | 77 | 95 | 60 | - | - | 92 | 63 | - | - |

Table 5. Synergistic Activity of XDE-729 Methyl Ester (I) and Fluroxypyr Methylheptyl Ester (MHE) Herbicidal Compositions on MATCH, STEME, and VERHE Control at 49-76 Days After Application (DAA) in Cereal Crops.

| XDE-729 (Me) | Fluroxypyr (MHE) | % Visual Injury | | | | | |
|---|---|---|---|---|---|---|---|
| (grams ae/ha) | | MATCH (54 DAA) | | STEME (76 DAA) | | VERHE (49 DAA) | |
| | | Obs | Exp | Obs | Exp | Obs | Exp |
| 4.5 | 0 | - | - | 22 | - | - | - |
| 0 | 110 | - | - | 67 | - | - | - |
| 4.5 | 110 | - | - | 93 | 75 | - | - |

(continued)

| XDE-729 (Me) | Fluroxypyr (MHE) | % Visual Injury | | | | | |
|---|---|---|---|---|---|---|---|
| (grams ae/ha) | | MATCH (54 DAA) | | STEME (76 DAA) | | VERHE (49 DAA) | |
| | | Obs | Exp | Obs | Exp | Obs | Exp |
| 6 | 0 | - | - | 38 | - | 23 | - |
| 0 | 110 | - | - | 67 | - | 42 | - |
| 6 | 110 | - | - | 96 | 80 | 77 | 55 |
| 6 | 0 | 0 | - | - | - | - | - |
| 0 | 150 | 0 | - | - | - | - | - |
| 6 | 150 | 75 | 0 | - | - | - | - |

Table 6. Synergistic Activity of XDE-729 Triethylamine (TEA) Salt (I) and Fluroxypyr Methylheptyl Ester (MHE) Herbicidal Compositions on CHEAL, CIRAR, MATCH, STAAN, and STEME Control at 14 - 28 Days After Application (DAA) in Cereal Crops.

| XDE-729 (TEA) | Fluroxypyr (MHE) | % Visual Injury | | | | | | | | | |
|---|---|---|---|---|---|---|---|---|---|---|---|
| (grams ae/ha) | | CHEAL (14 DAA) | | CIRAR (14 DAA) | | MATCH (27 DAA) | | STAAN (14 DAA) | | STEME (28 DAA) | |
| | | Obs | Exp | Obs | Exp | Obs | Exp | Obs | Exp | Obs | Exp |
| 8.8 | 0 | 83 | - | 64 | - | - | - | 64 | - | - | - |
| 0 | 150 | 10 | - | 10 | - | - | - | 30 | - | - | - |
| 8.8 | 150 | 91 | 84 | 88 | 67 | - | - | 90 | 75 | - | - |
| 35 | 0 | - | - | - | - | 8 | - | - | - | 10 | - |
| 0 | 200 | - | - | - | - | 47 | - | - | - | 27 | - |
| 35 | 200 | - | - | - | - | 63 | 51 | - | - | 57 | 34 |

MEOPA - Escoba blanco (*Melochia parviflora*)
AMARE - Redroot pigweed (*Amaranthus retroflexus*)
LAMPU-Purple deadnettle (*Lamium purpureum*
POLAV -Prostrate knotweed (*Polygonum aviculare*)
STEME-Common chickweed (*Stellaria media*)
MATCH - Wild chamomile (*Matricaria chamomilla*)
VERHE-Ivy-leaved speedwell (*Veronica hederifolia*)
PAPRH - Corn poppy (*Papaver rhoeas*)
SINAR - Wild mustard (*Sinapis arvensis*)
VEROF-Common speedwell (*Veronica officinalis*)
VIOAR-Field violet (*Viola arvensis*)
CASOB - Sickle pod (*Cassia abtusifolia*)
CHEAL - Common lambsquarters (*Chenopodium album*)
CIRAR - Canada thistle (*Cirsium arvense*)
STAAN - Annual woundwort (*Stachys annua*)
g ae/ha -Grams acid equivalent per hectare
Obs - Observed percent weed control
Exp - Expected weed control per Colby analysis

## Claims

1. A composition comprising a herbicidally effective amount of (a) a compound of the formula (I):

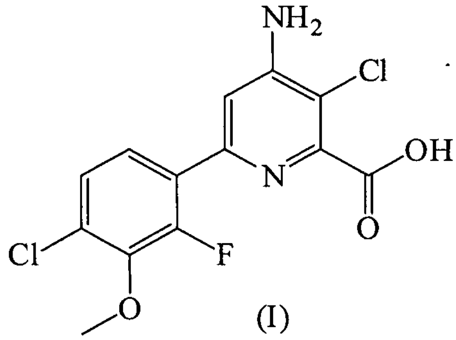

(I)

or, with respect to its carboxylic acid moiety, an agriculturally acceptable salt, ester, or amide thereof, and (b) fluroxypyr, or, with respect to its carboxylic acid moiety, an agriculturally acceptable ester, amide, or salt thereof, wherein the carboxylic acid equivalent weight ratio of (a) to (b) is from 1:3 to 1:62.

2. The composition of claim 1, wherein the composition further comprises a herbicide safener, which preferably is cloquintocet acid or cloquintocet mexyl.

3. The composition of claim 1, wherein (a) is a $C_1$-$C_4$ or benzyl ester of the compound of formula (I).

4. The composition of claim 3, wherein (a) is the methyl ester of the compound of formula (I).

5. The composition of claim 4, wherein (b) is fluroxypyr meptyl.

6. The composition of claims 1 or 5, wherein the carboxylic acid equivalent weight ratio of (a) to (b) is from 1:3 to 1:31.

7. The composition of claim 1, wherein (a) is the triethylammonium salt of the compound of formula (I).

8. The composition of claim 7, wherein (b) is fluroxypyr meptyl, and the carboxylic acid equivalent weight ratio of (a) to (b) preferably is from 1:6 to 1:17.

9. A method of controlling undesirable vegetation comprising contacting the undesirable vegetation, the area adjacent to the undesirable vegetation, or soil with a herbicidally effective amount of

(a) a compound of the formula (I):

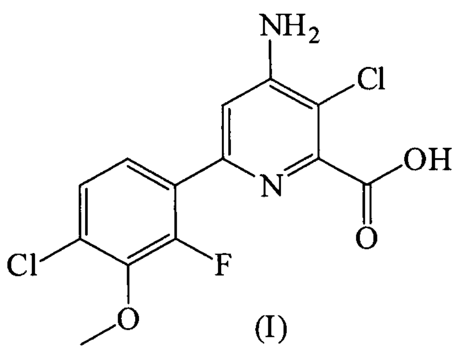

(I)

or, with respect to its carboxylic acid moiety, an agriculturally acceptable salt, ester, or amide thereof, and (b) fluroxypyr, or, with respect to its carboxylic acid moiety, an agriculturally acceptable ester, amide, or salt thereof, wherein the carboxylic acid equivalent weight ratio of (a) to (b) is from 1:3 to 1:62.

10. The method of claim 9 comprising contacting the undesirable vegetation, the area adjacent to the undesirable

vegetation, or soil with a herbicidally effective amount of the composition of claim 1.

**11.** The method of claims 9 or 10, wherein (a) is the methyl ester of the compound of formula (I) and (b) is fluroxypyr meptyl.

**12.** The method of claim 10, wherein the undesirable vegetation is Melochia, Eleusine, Lolium, or Panicum, preferably MEOPA, ELEIN, LOLMU, or PANDI.

**13.** The method of claim 10, wherein the composition is applied preemergently.

**14.** The method of claim 10, wherein the composition is applied post-emergently.

**Patentansprüche**

**1.** Eine Zusammensetzung umfassend eine herbizid wirksame Menge von (a) einer Verbindung der Formel (I):

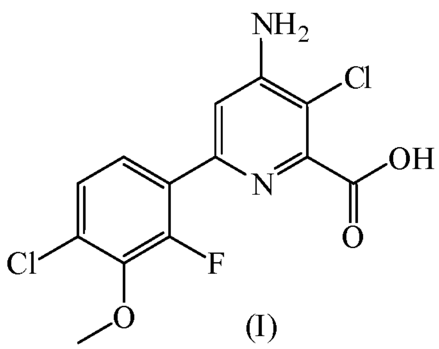

(I)

oder, in Bezug auf ihre Carbonsäurefunktionalität, ein landwirtschaftlich akzeptables Salz, Ester oder Amid derselben, und (b) Fluroxypyr oder, in Bezug auf seine Carbonsäurefunktionalität, einen landwirtschaftlich akzeptablen Ester, Amid oder Salz desselben, wobei das Carbonsäure äquivalente Gewichtverhältnis von (a) zu (b) von 1:3 bis 1:62 beträgt.

**2.** Die Zusammensetzung gemäß Anspruch 1, wobei die Zusammensetzung weiterhin einen Herbizid-Safener, welcher bevorzugt Cloquintocetsäure oder Cloquintocet-Mexyl ist, umfasst.

**3.** Die Zusammensetzung gemäß Anspruch 1, wobei (a) ein $C_1$-$C_4$- oder Benzylester der Verbindung der Formel (I) ist.

**4.** Die Zusammensetzung gemäß Anspruch 3, wobei (a) der Methylester der Verbindung der Formel (I) ist.

**5.** Die Zusammensetzung gemäß Anspruch 4, wobei (b) Fluroxypyr-Meptyl ist.

**6.** Die Zusammensetzung gemäß den Ansprüchen 1 oder 5, wobei das Carbonsäure äquivalente Gewichtsverhältnis von (a) zu (b) von 1:3 bis 1:31 beträgt.

**7.** Die Zusammensetzung gemäß Anspruch 1, wobei (a) das Triethylammoniumsalz der Verbindung der Formel (I) ist.

**8.** Die Zusammensetzung gemäß Anspruch 7, wobei (b) Fluroxypyr-Meptyl ist und das Carbonsäure äquivalente Gewichtsverhältnis von (a) zu (b) bevorzugt von 1:6 bis 1:17 beträgt.

**9.** Ein Verfahren zur Bekämpfung unerwünschter Vegetation umfassend das In-Kontakt-Bringen der unerwünschten Vegetation, der an die unerwünschte Vegetation angrenzenden Fläche oder des Bodens mit einer herbizid wirksamen Menge von

(a) einer Verbindung mit der Formel (I):

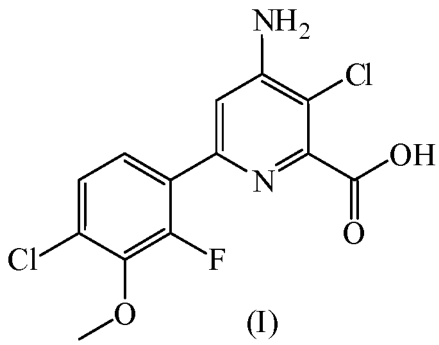

(I)

oder, in Bezug auf ihre Carbonsäurefunktionalität, ein landwirtschaftlich akzeptables Salz, Ester oder Amid derselben und (b) Fluroxypyr oder, in Bezug auf seine Carbonsäurefunktionalität, einen landwirtschaftlich akzeptablen Ester, Amid oder Salz desselben, wobei das Carbonsäure äquivalente Gewichtsverhältnis von (a) zu (b) von 1:3 bis 1:62 beträgt.

**10.** Das Verfahren gemäß Anspruch 9 umfassend das In-Kontakt-Bringen der ungewünschten Vegetation, der an die unerwünschte Vegetation angrenzenden Fläche oder des Bodens mit einer herbizid effektiven Menge der Zusammensetzung gemäß Anspruch 1.

**11.** Das Verfahren gemäß den Ansprüchen 9 oder 10, wobei (a) der Methylester der Verbindung der Formel (I) ist und (b) Fluroxypyr-Meptyl ist.

**12.** Das Verfahren gemäß Anspruch 10, wobei die unerwünschte Vegetation Melochia, Eleusin, Lolium oder Panicum, bevorzugt MEOPA, ELEIN, LOLMU oder PANDI ist.

**13.** Das Verfahren gemäß Anspruch 10, wobei die Zusammensetzung im Vorlauf angewendet wird.

**14.** Das Verfahren gemäß Anspruch 10, wobei die Zusammensetzung im Nachlauf angewendet wird.

## Revendications

**1.** Composition comprenant, en quantité à effet herbicide,

a) un composé de formule (I) :

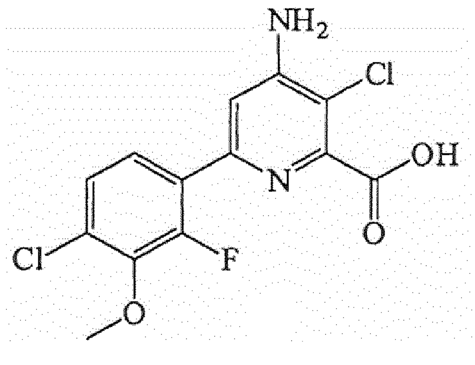

(I)

ou, en rapport avec son groupe carboxyle, un sel, ester ou amide, admissible du point de vue agronomique, de ce composé,
b) et du fluroxypyr ou, en rapport avec son groupe carboxyle, un ester, amide ou sel, admissible du point de vue agronomique, de ce composé,

dans laquelle le rapport, en poids d'équivalents d'acide carboxylique, du composant (a) au composant (b) vaut de 1/3 à 1/62.

2. Composition conforme à la revendication 1, qui comprend en outre un agent phytoprotecteur anti-herbicide, qui est de préférence de l'acide cloquintocet ou du cloquintocet-mexyle.

3. Composition conforme à la revendication 1, dans laquelle le composant (a) est un ester d'alkyle en $C_1$-$C_4$ ou l'ester de benzyle du composé de formule (I).

4. Composition conforme à la revendication 3, dans laquelle le composant (a) est l'ester de méthyle du composé de formule (I).

5. Composition conforme à la revendication 4, dans laquelle le composant (b) est du fluroxypyr-meptyle.

6. Composition conforme à la revendication 1 ou 5, dans laquelle le rapport, en poids d'équivalents d'acide carboxylique, du composant (a) au composant (b) vaut de 1/3 à 1/31.

7. Composition conforme à la revendication 1, dans laquelle le composant (a) est le sel de triéthyl-ammonium du composé de formule (I).

8. Composition conforme à la revendication 7, dans laquelle le composant (b) est du fluroxypyr-meptyle et le rapport, en poids d'équivalents d'acide carboxylique, du composant (a) au composant (b) vaut de préférence de 1/6 à 1/17.

9. Procédé de lutte contre des végétaux indésirables, comportant le fait de mettre les végétaux indésirables, la zone adjacente aux végétaux indésirables ou le sol en contact avec, en quantité à effet herbicide,

a) un composé de formule (I) :

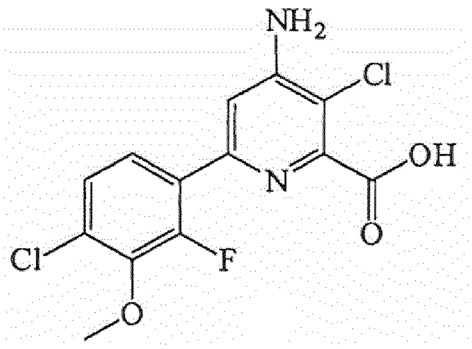

(I)

ou, en rapport avec son groupe carboxyle, un sel, ester ou amide, admissible du point de vue agronomique, de ce composé,
b) et du fluroxypyr ou, en rapport avec son groupe carboxyle, un ester, amide ou sel, admissible du point de vue agronomique, de ce composé,

étant entendu que le rapport, en poids d'équivalents d'acide carboxylique, du composant (a) au composant (b) vaut de 1/3 à 1/62.

10. Procédé conforme à la revendication 9, qui comporte le fait de mettre les végétaux indésirables, la zone adjacente aux végétaux indésirables ou le sol en contact avec une composition conforme à la revendication 1, utilisée en une quantité à effet herbicide.

11. Procédé conforme à la revendication 9 ou 10, dans lequel le composant (a) est l'ester de méthyle du composé de formule (I) et le composant (b) est du fluroxypyr-meptyle.

12. Procédé conforme à la revendication 10, dans lequel les végétaux indésirables sont Melochia, Eleusine, Lolium ou Panicum, de préférence MEOPA, ELEIN, LOLMU ou PANDI.

13. Procédé conforme à la revendication 10, dans lequel on applique la composition avant levée.

**14.** Procédé conforme à la revendication 10, dans lequel on applique la composition après levée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61567413 A
- US 7314849 B2


### Non-patent literature cited in the description


- Herbicide Handbook of the Weed Science Society of America. 2007, 429
- The Pesticide Manual. 2009
- McCutcheon's Detergents and Emulsifiers Annual. MC Publishing Corp, 1998
- Encyclopedia of Surfactants. Chemical Publishing Co, 1980, vol. I-III
- **COLBY, S. R.** Calculation of the synergistic and antagonistic response of herbicide combinations. *Weeds,* 1967, vol. 15, 20-22